# EUROPEAN PATENT APPLICATION

(11) **EP 1 734 642 A2**
(43) Date of publication of application: **20.12.2006**
(21) Application number: 06002286.0
(22) Date of filing: 03.02.2006
(51) Int. Cl.: H02K 16/02, H02K 7/14

(54) **Motor with an induction rotor and a synchronous rotor**

(30) Priority: 16.06.2005 KR 2005052060
(71) Applicant: LG Electronics Inc., Yongdungpo-Gu Seoul (KR)
(72) Inventor: Han, Seung-DO, Incheon (KR); Shin, Hyoun-Jeong, Namdong-Gu Incheon (KR); Ahn, Jae-Hong, Manan-Gu, Anyang, Gyeonggi-Do (KR); Oh, Seung-Suk, Gwangmyeong Gyeonggi-Do (KR)
(74) Representative: Vossius & Partner

(57) **Abstract**

An induction motor includes: a stator in which a plurality of winding coils wound in a central direction of a stator core are arranged; an induction rotor rotatably inserted into the stator; and a synchronous rotor including a magnet and rotatably inserted into an air gap between the stator and the induction rotor, so that the induction motor reduces the size of the whole motor and has a structure of a compact size to thereby reduce installation space and manufacturing cost and increase output power and efficiency.

## Description

The present invention relates to an induction motor, and more particularly, to an induction motor which reduces the size of the whole motor, cuts down manufacturing cost, and enhances motor efficiency.

In general, a motor converts electric energy into kinetic energy. The motor is applied to various fields such as home appliances and used as a source of power for the products. For instance, in case of a refrigerator, a motor rotates a fan to circulate cool air inside the refrigerator. In case of an air conditioner, the motor rotates a fan to move cool air formed in an evaporator toward the room.

When a motor is installed at home appliances or the like, a space occupied by the motor requires to be minimized and simultaneously the motor requires to be minimized in size to allow free installation position thereof. In addition, in order to increase competitiveness of a product at which the motor is installed, reducing manufacturing cost for the motor is one of the most important issues.

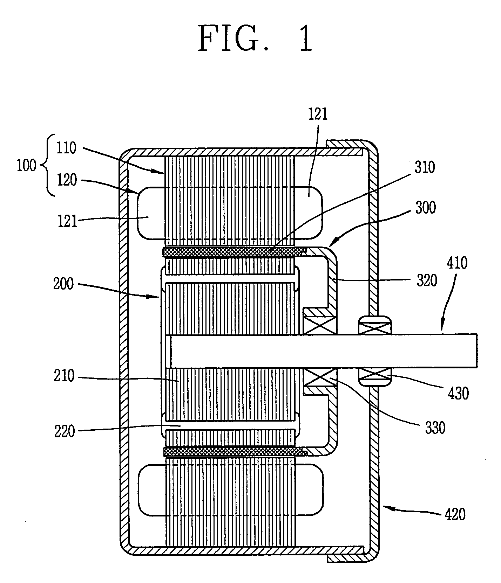

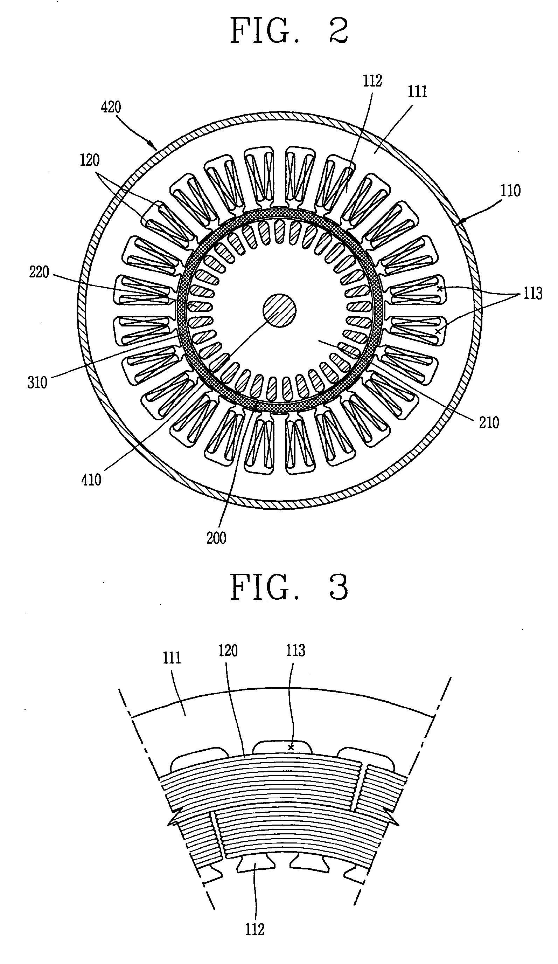

Figure 1 is a front sectional view illustrating one example of an induction motor which is being manufactured by the present applicant who has carried out research and development for the motor, and Figure 2 is a side sectional view of the induction motor.

As shown therein, the induction motor includes: a stator 100 in which a coil is wound in a circumferential direction; an induction rotor 200 rotatably inserted into the stator 100; and a synchronous rotor 300 rotatably inserted between the stator 100 and the induction rotor 200.

The stator 100 includes a stator core 220 having a certain length and a winding coil 120 wound inside the stator core 110 in the circumferential direction. The stator core 110 includes a yoke portion 111 having a ring shape with a certain width and a plurality of teeth extending to have a certain length at an inner circumferential surface of the yoke portion 111. Slots 113 are formed between the teeth 112 and the teeth 112. End surfaces of the plurality of teeth 112 form, inside the stator core 110, an insertion hole in which the induction rotor 200 is located. The stator core 110 is a lamination body in which a plurality of sheets are laminated.

The winding coil 120 is wound several times around the teeth 112 and the teeth 112 so as to encompass the plurality of teeth 112. The winding coil 120 is located at the slot 113 formed by the teeth 112 and the teeth 112. That is, the winding coil 120, as shown in Figure 3, is not only located in a circumferential direction of the stator core 110 in which the plurality of teeth 112 are arranged but also protrudes toward both sides of the stator core 110.

The induction rotor 200 includes a rotor core 210 having a round bar shape with a certain length and a cage 220 inserted into the rotor core 210. The rotor core 210 is a lamination body in which a plurality of sheets are laminated and a rotation shaft 410 is coupled to the center of the rotor core 210.

The induction rotor 200 is inserted into the insertion hole of the stator 100.

The synchronous rotor 300 includes a magnet 310 having a cylindrical shape with a certain thickness and a holder 320 having a cup shape and supporting the magnet 310. The magnet 310 is rotatably inserted between an inner circumferential surface of the insertion hole of the stator 100 and an outer circumferential surface of the induction rotor 200. A bearing 330 is coupled to one side of the holder 320 and the bearing 330 is coupled to the rotation shaft 410.

The stator 100 is mounted in a motor casing 420. A bearing 430 is coupled to one side of the motor casing 420 and the rotation shaft 410 is coupled to the bearing 430. The stator 100 is coupled such that its outer circumferential surface comes in contact with an inner circumferential surface of the motor casing 420.

The operation of the above-described induction motor will be described as follows.

When a first electric current is sequentially supplied to the winding coil 120 of the stator 100 and a rotating magnet field is formed, the synchronous rotor 300 is synchronized by the rotating magnet field and therefore rotated at synchronous speed. Since the synchronous rotor 300 is a magnet, the rotating magnet field having an intensive magnet field is generated by the rotation of the synchronous rotor 300. By the rotating magnet field of the synchronous rotor 300, the induction rotor 200 is rotated.

When the induction rotor 200 is rotated, a rotary force of the induction rotor 200 is transferred to a part requiring for the rotary force through the rotation shaft 410.

However, since the above-described induction motor has a part, where an effective magnet field is not generated from during the operation, of the winding coil 120 of the stator 100, efficiency of the induction motor is deteriorated.

That is, end turn portions 121 are formed at both sides of the stator 100 when the winding coil 120 wound around the stator 100 is wound between the teeth 112 and the teeth 112. Not passing the teeth 112, the end turn portion 121 cannot generate a rotating magnet field affecting the induction rotor 200 and furthermore copper loss, which is the self-resistance of the end turn portion 121, is increased to thereby reduce efficiency and output power. Figures 4 and 5 show the shape of flux being generated during the operation of the induction motor. Figure 6 is a graph showing counter electromotive force being generated during the operation of the induction motor.

Though the end turn portion 121 varies its length according to a winding method, the end turn portion 121 exists of necessity in the existing winding method. That is, a plurality of poles should be formed in the stator 100 in order to generate a rotating magnet field in the winding coil 120. For this, the winding coil 120, as shown in Figure 3, is not wound around the adjacent teeth 112 but is wound by skipping the several teeth 112. Therefore, the end turn portion 121 inevitably increases in length.

Accordingly, efficiency of the induction motor is deteriorated, the size of the induction motor increases, and manufacturing cost rises.

Therefore, an object of the present invention is to provide an induction motor which reduces the size of the whole motor, reduces manufacturing cost and enhances motor efficiency.

To achieve these and other advantages and in accordance with the purpose of the present invention, as embodied and broadly described herein, there is provided an induction motor comprising: a stator in which a plurality of winding coils wound in a central direction of a stator core are arranged; an induction rotor rotatably inserted into the stator; and a synchronous rotor including a magnet and rotatably inserted into an air gap between the stator and the induction rotor.

The foregoing and other objects, features, aspects and advantages of the present invention will become more apparent from the following detailed description of the present invention when taken in conjunction with the accompanying drawings.

The accompanying drawings, which are included to provide a further understanding of the invention and are incorporated in and constitute a unit of this specification, illustrate embodiments of the invention and together with the description serve to explain the principles of the invention.

In the drawings:
Figures 1 and 2 are a front sectional view and a side sectional view illustrating an induction motor;
Figure 3 is a side sectional view enlarging a part of the induction motor;

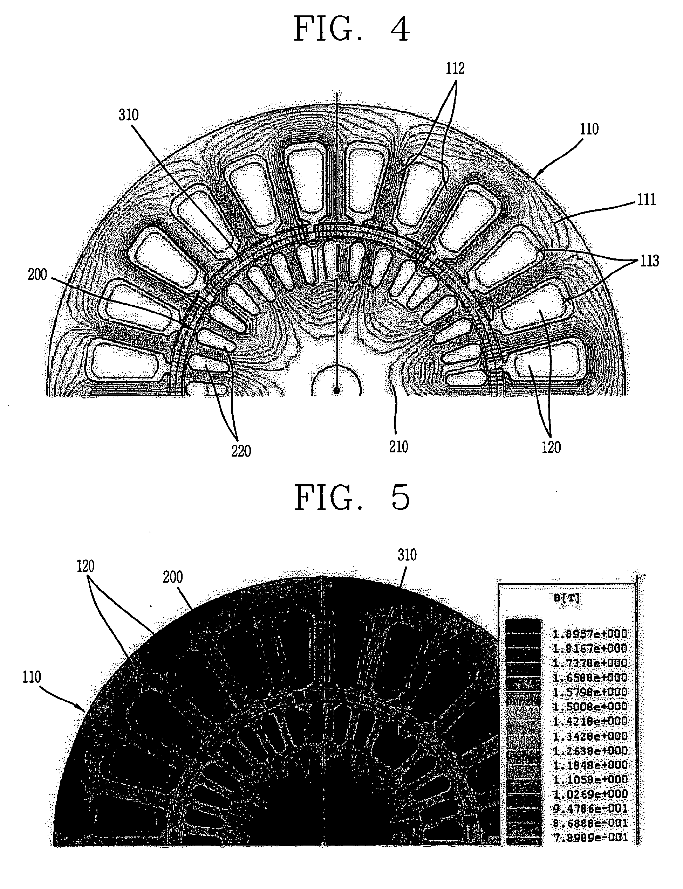

Figures 4 and 5 are graphs, each of which shows the shape of flux being generated during the operation of the induction motor;

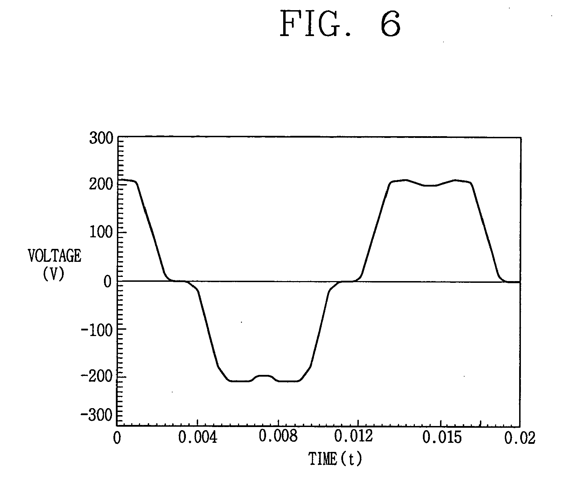

Figure 6 is a graph illustrating counter electromotive force being generated during the operation of the induction motor;

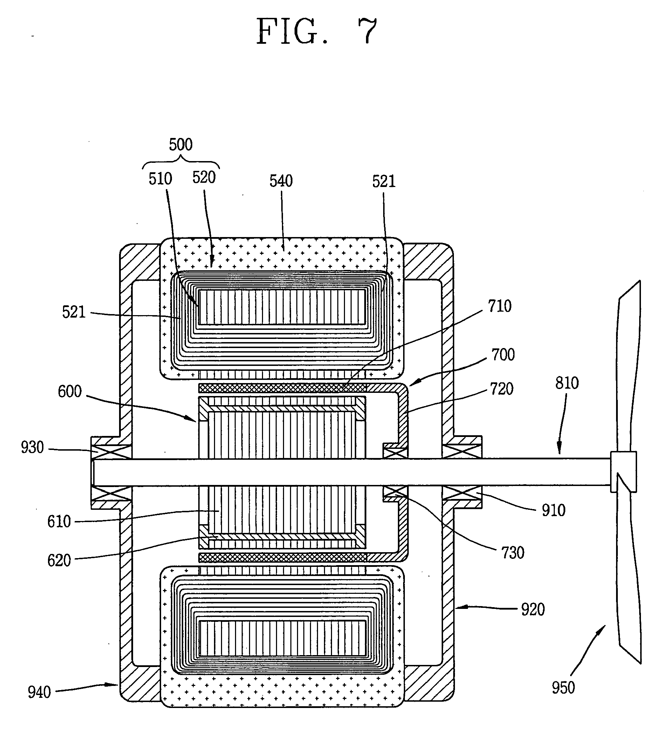

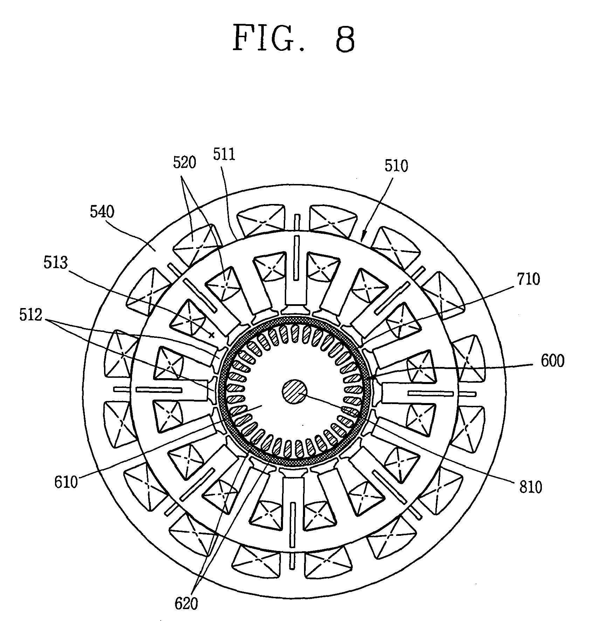

Figures 7 and 8 are a front sectional view and a side sectional view illustrating an induction motor of the present invention;

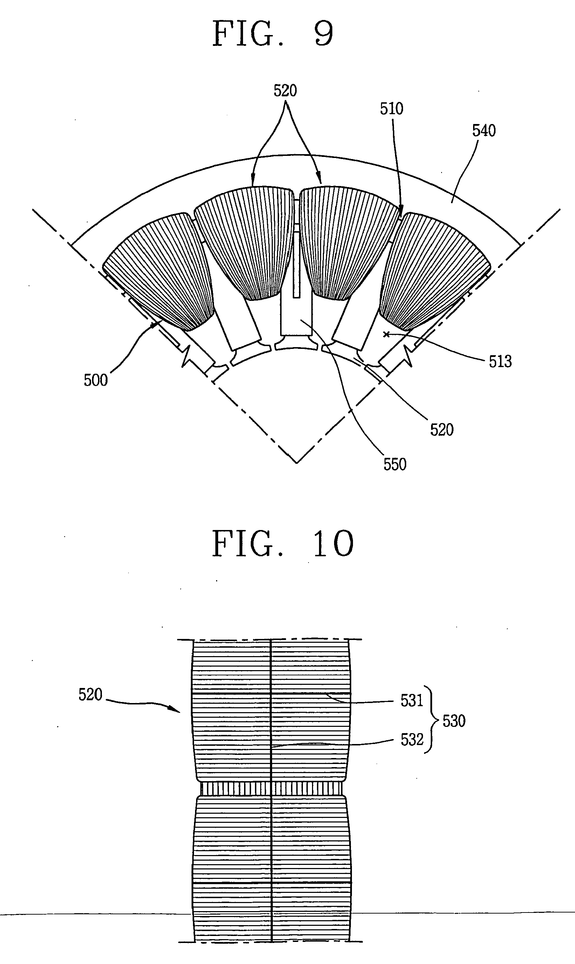

Figure 9 is a side view illustrating a part of the induction motor of the present invention;
Figure 10 is a front view illustrating a part of the induction motor of the present invention;

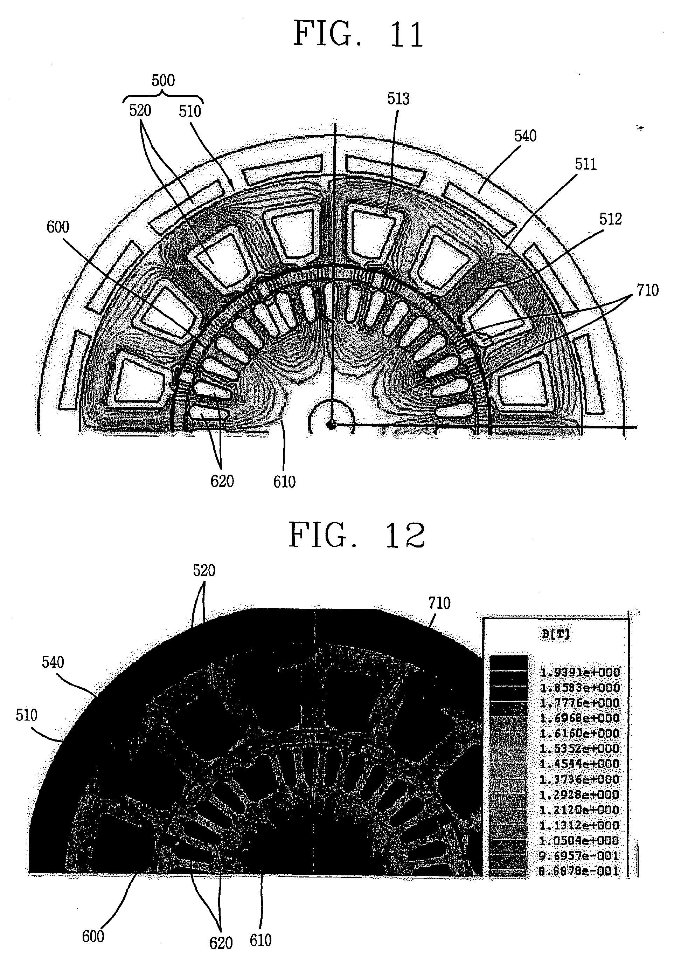

Figures 11 and 12 are side views, each of which shows the shape of flux being generated during the operation of the induction motor of the present invention; and

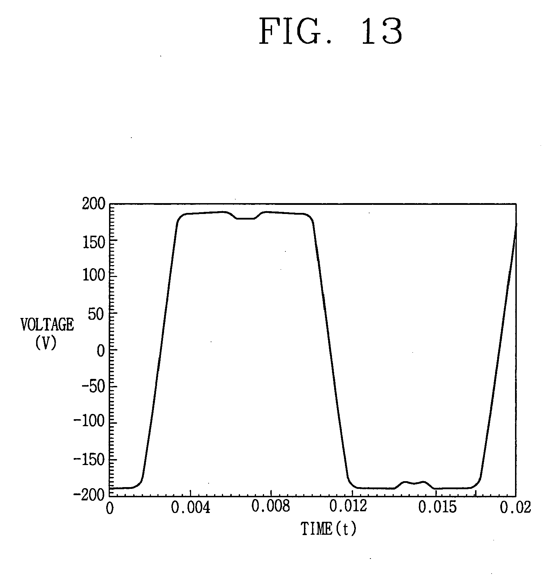

Figure 13 is a graph illustrating counter electromotive force being generated during the operation of the induction motor of the present invention.

Reference will now be made in detail to the preferred embodiments of the present invention, examples of which are illustrated in the accompanying drawings.

Figure 7 is a front sectional view illustrating an induction motor having one embodiment of an induction motor of the present invention and Figure 8 is a side sectional view of the induction motor.

As shown therein, an induction motor of the present invention includes: a stator 500 in which a plurality of winding coils are wound in a central direction of a stator core; an induction rotor 600 rotatably inserted into the stator 500; and a synchronous rotor 700 including a magnet and rotatably inserted into an air gap between the stator 500 and the induction rotor 600.

The stator 500 includes a stator core 510 having a certain length and a plurality of winding coils 520 wound in the central direction of the stator core 510.

The stator core 510 includes: a yoke portion 511 having a ring shape with a certain width; and a plurality of teeth 512 having a certain length in an inner circumferential surface of the yoke portion 511 and extending in a central direction of the yoke portion 511. Slots 513 are formed between the teeth 512 and the teeth 512.

The winding coils 520, as shown in Figure 9, are formed in such a manner that the coils are wound to encompass an inner surface of the slot 513 of the stator core 510 and an outer circumferential surface of the stator core 510. A longitudinal direction of the winding coil 520 is toward the central direction of the stator core 510.

Preferably, the winding coils 520 adjacent to each other in the winding coil 520 part located at the outer circumferential surface of the stator core 510 maintain a certain gap therebetween.

Meanwhile, the winding coils 520 may be wound such that the winding coils 520 adjacent to each other in the winding coil part located at the outer circumferential surface of the stator core 510 come in contact with each other. Here, the winding coil 520 protruding toward the outer circumferential surface of the stator core 510 may decrease in height.

Preferably, an insulating wire 530 is provided to fix the winding coils 520 at the winding coil 520 wound around the stator core 510. The insulating wire 530, as shown in Figure 10, includes an outer circumferential surface side insulating wire 531 fixing the winding coils 520 to the outer circumferential surface side of the stator core 510 and an inner wire 532 wound once or twice around the winding coils 520 and connected to the outer circumferential surface side insulating wire 531.

A protective member 540 encompassing a part of the winding coils 520 is provided at the outer circumferential surface of the stator core 510. Preferably, the protective member 540 is an insulating material.

An insulating member 550 is inserted into the slot 513 of the stator core 510.

The winding coils 520 include auxiliary winding coils to which an electric current is supplied during initial driving and main winding coils to which an electric current is supplied at synchronous speed. The main winding coils and the auxiliary winding coils are alternately located.

An insertion hole in which the induction rotor 600 is located is formed inside the stator core 510 by end surfaces of the plurality of teeth 512. The stator core 510 is a lamination body in which a plurality of sheets are laminated.

The induction rotor 600 includes a rotor core 610 having a round bar shape and a cage 620 inserted into the rotor 610. The rotor core 610 is a lamination body in which a plurality of sheets are laminated, and a rotation shaft 810 is coupled to the center of the rotor core 610.

The induction rotor 600 is inserted into the insertion hole of the stator 500.

The synchronous rotor 700 includes a magnet 710 and a holder 720 having a cup shape and supporting the magnet 710. The magnet 710 is magnetized to have a plurality of poles in a circumferential direction.

The magnet 710 is rotatably inserted between an inner circumferential surface of the insertion hole and an outer circumferential surface of the induction rotor 600. A bearing 730 is coupled to one side of the holder 720 and the bearing 730 is coupled to the rotation shaft 810.

A first case 920 having a bearing 910 is coupled to one surface of the stator 500 and a second case 940 having a bearing 930 is coupled to the other surface of the stator 500. The first case 920 and the second case 940 are respectively coupled to be in contact with both side surfaces of the stator core 510 of the stator 500. When a protective member 540 is provided at the stator core 540, the first and second cases 92 and 940 are respectively coupled to be in contact with both side surfaces of the protective member 540.

The first and second cases 920 and 940 are coupled to the stator 500 according to various methods such as bolting.

A rotation shaft 810 pressingly inserted into the induction rotor 600 is supported by the bearing 910 formed on the first case 920 and the bearing 930 formed on the second case 940.

A fan 950 is fixedly coupled to the rotation shaft 810 supported by the first and second cases 920 and 940. Preferably, the fan 950 is a fan for an air conditioner which moves air inside the air conditioner.

Hereinafter, an operational effect of the induction motor of the present invention will be described.

When power is supplied to the induction motor, a rotating magnet field is generated by an electric current flowing through the main winding coils 520 and the auxiliary winding coils 520. If the rotating magnet field is generated by the electric current flowing through the auxiliary winding coil 520, the synchronous rotor 700 is synchronized by the rotating magnetic field and rotated at synchronous speed. Since the synchronous rotor 700 is the magnet 710, the synchronous rotor 700 generates the rotating magnet field having an intensive magnet field by the rotation of the synchronous rotor 700. By the rotating magnetic field by the synchronous rotor 700, the induction rotor 600 is rotated. The auxiliary winding coil 520 through which the current flows serves as initial driving of the synchronous rotor 700, and the main winding coil 520 through which the electric current flows generates output power of the induction rotor 600.

When the induction rotor 600 rotates, a rotary force of the induction rotor 600 is transferred through the rotation shaft 810. When a fan 950 is coupled to the rotation shaft 810, flow is generated while the fan 950 rotates. Especially, when the induction motor and the fan 950 are mounted in the air conditioner, they move cool air formed inside the air conditioner.

The induction motor of the present invention reduces the length of the end turn portions protruding toward the both side surfaces of the stator 500 in the longitudinal direction of the stator 500 without lowering electromagnetic performance in comparison to a structure of the conventional induction motor as winding coils 520 forming the stator 500 are wound toward a central direction of the stator 500 to encompass the inner surface of the slot 513 of the stator core 510 and the outer circumferential surface of the stator core 510.

As the end turn portions of the winding coils 520 which protrude in the longitudinal direction of the stator 500 decrease in length, a structure of the stator 500 becomes compact and the size of the whole stator 500 is reduced. In addition, since the end turn portion 521 of the winding coil 520 decreases in size, an inefficient part of the winding coil 520 is minimized to thereby reduce resistance of a current flowing through the winding coil 520. Figures 11 and 12 show the shape of flux being generated during the operation of the induction motor of the present invention. Figure 13 is a graph illustrating counter electromotive force being generated during the operation of the induction motor of the present invention.

As described so far, the induction motor of the present invention allows the stator to have a compact size and reduces the size of the whole stator, so that the induction motor including the stator has a compact size and the size of the induction motor decreases in size. Accordingly, when the induction of the present invention is applied to home appliances such as an air conditioner, installation space for the induction motor is reduced.

In addition, by minimizing the inefficient part of the winding coil, since the amount of the winding coils used is reduced to thereby cut down manufacturing cost, the present invention increases product competitiveness.

## Claims

1. An induction motor comprising:
a stator in which a plurality of winding coils wound in a central direction of a stator core are arranged;
an induction rotor rotatably inserted into the stator; and
a synchronous rotor including a magnet and rotatably inserted into an air gap between the stator and the induction rotor.

2. The induction motor of claim 1, wherein the stator comprises:
a stator core having certain outer diameter and length and including a plurality of teeth formed in the central direction; and
a plurality of winding coils wound to encompass an inner circumferential surface of a slot formed between the teeth and the teeth and an outer circumferential surface of the stator core.

3. The induction motor of claim 2, wherein the winding coils adjacent to each other in the winding coil part located at the outer circumferential surface of the stator core are in contact with each other.

4. The induction motor of claim 2, wherein the winding coils adjacent to each other in the winding coil part located at the outer circumferential surface of the stator core maintain a certain gap therebetween.

5. The induction motor of any of claims 2 to 4, wherein an insulating wire is provided to fix the winding coils at an outer circumferential surface side of the stator core.

6. The induction motor of any of claims 2 to 5, wherein a protective member encompassing a part of the winding coil is provided at the outer circumferential surface of the stator core.

7. The induction motor of claim 6, wherein the protective member is an insulating material.

8. The induction motor of any of claims 1 to 7, wherein the magnet of the synchronous rotor has a hollow cylindrical shape with certain thickness and length and is magnetized to have a plurality of poles in a circumferential direction thereof.

9. The induction motor of any of claims 1 to 8, wherein the winding coils comprise auxiliary winding coils to which an electrical current is supplied during initial driving and main winding coils to which an electric current is supplied at synchronous speed.

10. The induction motor of any of claims 1 to 9, wherein a rotation shaft is pressingly inserted into the center of the induction rotor and a fan is fixed to the rotation shaft.

11. The induction motor of claim 10, wherein the fan is a fan for an air conditioner which moves air inside the air conditioner.

12. The induction motor of any of claims 1 to 11, wherein a first case and a second case having bearings, respectively, are coupled to both side surfaces of the stator separately.
